# EUROPEAN PATENT APPLICATION

(11) **EP 1 987 744 A1**
(43) Date of publication of application: **05.11.2008**
(21) Application number: 07713852.7
(22) Date of filing: 06.02.2007
(51) Int. Cl.: A47F 5/00, G06Q 50/00, G09G 5/00

(54) **ELECTRONIC SHELF TAG SYSTEM, ELECTRONIC SHELF TAG AND CORRESPONDING CHANGE METHOD**

(30) Priority: 24.02.2006 JP 2006047830
(71) Applicant: ISHIDA CO., Ltd., Kyoto-shi, Kyoto 606-8392 (JP)
(72) Inventor: NOBUTSUGU, Hideo, Ritto-shi, Shiga 520-3026 (JP); KIKUKAWA, Tsuyoshi, Kyoto-shi, Kyoto 606-8392 (JP)
(74) Representative: Skone James, Robert Edmund
(86) International application number: PCT/JP2007/052023
(87) International publication number: WO 2007/097187

(57) **Abstract**

It is an object of the present invention to provide techniques for shortening a time required for establishing a correspondence between an electronic shelf label and a product. In an electronic shelf label system (1), in response to receipt of a correspondence cancellation signal in an electronic shelf label (5), a hardware information screen (S2) including a device code (8d) appears. Thus, in the electronic shelf label (5) in an unlinked state, the device code (8d) is kept being displayed. Accordingly, in a subsequent linking process for establishing a correspondence between the electronic shelf label (5) and a product, a process for causing the electronic shelf label (5) to display the device code (8d) is unnecessary, to thereby significantly shorten a time required for establishing a correspondence between the electronic shelf label (5) and a product.

## Description

### Technical Field

The present invention relates to techniques of an electronic shelf label which is located in such a manner as to correspond to each product and is capable of displaying product data of its corresponding product.

### Background Art

In general, in stores such as supermarkets and convenience stores, selling prices of products in a store are under centralized control with the use of a product master stored in a point-of-sale (POS) system or the like. On the other hand, indication of selling prices to customers (consumers) is achieved by shelf labels formed of paper which are placed in respective positions of products in most cases. In such cases where shelf labels formed of paper are employed, human errors such as errors in selling prices are likely to occur because shelf labels can not be managed without the help of manpower. For this reason, an incorrect selling price different from a selling price which is supposed to be provided at the time of checkout using a cash register of a POS system may possibly be indicated to customers.

In recent years, an electronic shelf label system (ESL system) has been put into practical use in order to overcome the foregoing problems. In an electronic shelf label system, portable electronic shelf labels for displaying product data such as selling prices are located in such a manner as to respectively correspond to products. Then, product data including selling prices based on a product master are transmitted to the respective electronic shelf labels from a distribution device, and the selling prices are displayed on the respective electronic shelf labels. As a result, correct selling prices identical to selling prices which are supposed to be provided at the time of checkout are displayed on the electronic shelf labels, and correct selling prices can be indicated to customers.

A server acting as a main part of a distribution device stores a link file in which device codes for identifying respective electronic shelf labels and product codes for identifying respective products correspond to each other, respectively. The link file allows electronic shelf labels and products to correspond to each other, respectively, in the form of data, so that product data of products can be distributed to their corresponding electronic shelf labels, respectively (refer to Patent Document 1, for example).

The following documents are cited as prior art documents which disclose techniques related to the present invention.

Patent Document 1: Japanese Patent Application Laid-Open No. 2004-265196
Patent Document 2: Japanese Patent Application Laid-Open No. 2005-301030

### Description of the Invention

When locations or the like of products in a store are changed, it is necessary to perform a linking process for establishing new correspondences between electronic shelf labels and products. In a linking process, device codes of electronic shelf labels for which new correspondences are to be established and product codes of produces for which new correspondences are to be established must be acquired as data of a link file.

According to a conventionally-suggested method of acquiring a device code of an electronic shelf label, in performing a linking process, a predetermined control signal is transmitted to an electronic shelf label using a remote controller or the like, to cause the electronic shelf label to display a device code thereof, and then, the displayed device code is read out (refer to Patent Document 1, for example).

However, the foregoing process steps for causing an electronic shelf label to display a device code thereof are complicated. When locations or the like of products in a store are changed, a linking process is performed on each of an enormous number of electronic shelf labels in general. As such, if each of an enormous number of electronic shelf labels is caused to display a device code, a significantly long time is required to establish correspondences between all electronic shelf labels and all products.

One possible solution to overcome the foregoing disadvantage is to previously affix a label with a device code being printed thereon or the like to an electronic shelf label. However, it is impractical to save such a space for a label in an electronic shelf label which is required to be more compact, and also, the foregoing solution is undesirable because it results in provision of unnecessary information to customers and lessens the visual effects.

In view of the foregoing, it is an object of the present invention to provide techniques for allowing reduction of a time required for establishing correspondences between electronic shelf labels and products.

According to a first aspect of the present invention, an electronic shelf label system includes: a plurality of electronic shelf labels which are located in such a manner as to respectively correspond to products and display product data of the products respectively corresponding thereto; and a server for distributing the product data to the plurality of electronic shelf labels. The server includes: a storage means for storing link information in which product identification information for identifying the products and hardware identification information for identifying the plurality of electronic shelf labels respectively correspond to each other; and a transmission means for transmitting a correspondence cancellation signal to the electronic shelf labels which correspond to the products in the link information, in response to erasing of the link information. Each of the plurality of electronic shelf labels includes: a receipt means for receiving the correspondence cancellation signal; and a display means for displaying a hardware information screen including the hardware identification information of each of the electronic shelf labels in response to receipt of the correspondence cancellation signal.

According to a second aspect of the present invention, the electronic shelf label system according to the first aspect further includes: a portable device which includes a means for reading out the hardware identification information displayed on the display means of each of the electronic shelf labels and a means for acquiring the product identification information of a certain product from the certain product; and a creation means for newly creating the link information in which the hardware identification information and the product identification information which are acquired by the portable device correspond to each other.

According to a third aspect of the present invention, in the electronic shelf label system according to the first aspect, each of the plurality of electronic shelf labels further includes a detection means for detecting a remaining power of a battery which supplies driving power for each of the plurality of electronic shelf labels, and the hardware information screen further includes information indicating the remaining power of the battery.

According to a fourth aspect of the present invention, in the electronic shelf label system according to the first aspect, the display means includes display device which allows a change in displayed descriptions thereon and maintains the displayed descriptions while no driving power is supplied.

According to a fifth aspect of the present invention, in the electronic shelf label system according to the fourth aspect, each of the plurality of electronic shelf labels further includes a count means for counting the number of times of changes in the displayed descriptions on the display device, and the hardware information screen further includes information including the number of times of changes.

According to a sixth aspect of the present invention, the electronic shelf label system according to any of the first through fifth aspect, further includes a transmission device which is capable of transmitting a display change signal to the electronic shelf labels in response to an operation performed by a user. The receipt means is capable of receiving the display change signal transmitted from the transmission device, and the display means displays the hardware information screen in response to receipt of the display change signal.

According to a seventh aspect of the present invention, an electronic shelf label used for an electronic shelf label system, which is capable of displaying product data of a corresponding product, includes: a means for receiving a correspondence cancellation signal which is transmitted from a server for storing link information in which product identification information for identifying a product and hardware identification information for identifying the electronic shelf label correspond to each other, in response to erasing of the link information; and a display means for displaying the hardware identification information of the electronic shelf label in response to receipt of the correspondence cancellation signal.

According to an eighth aspect of the present invention, an electronic shelf label used for an electronic shelf label system, which is capable of displaying product data of a corresponding product, includes: a storage means which is capable of storing the product data; a detection means for detecting whether or not the product data is stored in the storage means; and a display means for displaying hardware identification information unique to the electronic shelf label when the product data is not stored in the storage means.

According to a ninth aspect of the present invention, a method of changing a correspondence between an electronic shelf label which is used for an electronic shelf label system and is capable of displaying product data of a corresponding product and the product, includes the steps of: (a) erasing link information in which product identification information for identifying the product and hardware identification information for identifying the electronic shelf label correspond to each other; (b) causing the electronic shelf label which corresponds to the product in the link information to display the hardware identification information thereof, in response to erasing of the link information; (c) reading out the hardware identification information displayed on the electronic shelf label; (d) acquiring the product identification information of the product from the product; and (e) creating new link information in which the hardware identification information read out in the step (c) and the product identification information acquired in the step (d) correspond to each other.

According to the first through ninth aspects, the hardware identification information is displayed on each of the electronic shelf labels which no longer corresponds to any product. This eliminates a need for a process for causing the electronic shelf label to display the hardware identification information in establishing a correspondence between the electronic shelf label and a product. Thus, it is possible to significantly shorten a time required for establishing a correspondence between an electronic shelf label and a product.

According to the second aspect, the hardware identification information is displayed on each of the electronic shelf labels which no longer corresponds to any product. This eliminates a need for transmission of a signal from the portable device for causing the electronic shelf label to display the hardware identification information, to thereby reduce a size of the portable device.

According to the third aspect, the information indicating the remaining power of the battery is displayed on the hardware information screen, which allows easier determination as to whether or not the electronic shelf label is ready for use.

According to the fourth aspect, displayed descriptions of the hardware information screen can be maintained even though no driving power is supplied.

According to the fifth aspect, the number of times of changes in displayed descriptions is included in the hardware information screen, which allows easier determination of a life of a display device of the electronic shelf label.

According to the sixth aspect, with the use of the transmission device, it is possible to check information included in the hardware information screen at any given time.

These and other objects, features, aspects and advantages of the present invention will become more apparent from the following detailed description of the present invention when taken in conjunction with the accompanying drawings.

### Brief Descriptions of Drawings

[Fig. 1] Fig. 1 is a view for showing a manner in which electronic shelf labels included in an electronic shelf label system are located.
[Fig. 2]Fig. 2 is a view for showing an example of a structure of a store information system including an electronic shelf label system.
[Fig. 3]Fig. 3 is a view for showing a structure of an ESL server.
[Fig. 4]Fig. 4 is a view for showing an example of a link file.
[Fig. 5]Fig. 5 is a view for showing a structure of a handy terminal.
[Fig. 6]Fig. 6 is a view for showing an example of an electronic shelf label when displaying a product information screen.
[Fig. 7]Fig. 7 is a view for showing an example of an electronic shelf label when displaying a hardware information screen.
[Fig. 8]Fig. 8 is a flow chart for showing a flow of operations of an electronic shelf label system in an unlinking process.
[Fig. 9]Fig. 9 is a flow chart for showing a flow of operations of an electronic shelf label system in a linking process.
[Fig. 10]Fig. 10 is a flow chart for showing a flow of operations of an electronic shelf label when determining a state thereof.
[Fig. 11]Fig. 11 is a view for showing an example of an electronic shelf label when displaying information indicating a remaining power of a battery.
[Fig. 12]Fig. 12 is a sectional view of a display means formed of a non-volatile display device.
[Fig. 13]Fig. 13 is a view for showing an example of a state of a pixel of a non-volatile display device.
[Fig. 14]Fig. 14 is a view for showing another example of a state of a pixel of a non-volatile display device.
[Fig. 15]Fig. 15 is a view for showing an example of an electronic shelf label when displaying information indicating the number of times of changes in displayed descriptions on a display device.

### Best Mode for Carrying Out the Invention

Hereinafter, preferred embodiments of the present invention will be discussed with reference to accompanying drawings. It is noted that the following discussion will deal with an electronic shelf label system which is applied to stores such as a supermarket and a convenience store, as an example.

### <1. Outline of Electronic Shelf Label>

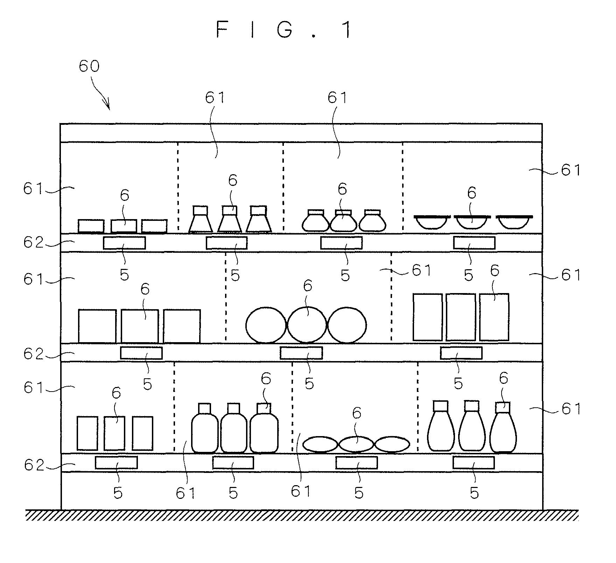

Fig. 1 is a view for showing a manner in which electronic shelf labels included in an electronic shelf label system according to the preferred embodiments of the present invention are located on shelves of a store. As shown in Fig. 1, a shelf 60 is partitioned into several spaces each of which is called a face 61, at which the same kind of products 6 are gathered and placed. Each of the products 6 is provided with a bar code indicating a product code which serves as product identification information for identifying the kind of product, with the use of a label or by printing.

In the shelf 60, electronic shelf labels 5 each of which is a portable compact communications device are attached to the shelf 60, respectively, in such a manner as to respectively correspond to the faces 61. Each of the electronic shelf labels 5 corresponds to a single product (exactly, a single kind of products) 6, and is located on a frame 62 below the face 61 of the corresponding product 6. Each of the electronic shelf labels 5 includes a display part, and the display part displays product data such as a selling price regarding the corresponding product 6. Customers (consumers) of a store become aware of selling prices of the products 6 through such display of the electronic shelf labels 5 as discussed above.

When locations or the like of the products 6 are changed, positions or sizes of the faces 61 are accordingly changed. In order to keep up with such changes of the faces 61, the electronic shelf labels 5 must not be fixed, and instead, the electronic shelf labels 5 can be detached from the frames 62 to be relocated in different positions. According to the preferred embodiment of the present invention, a plurality of shelves configured like the shelf 60 as shown in Fig. 1 are placed on a selling floor of a store.

### <2. Structure>

### <2-1. Structure of Store Information System>

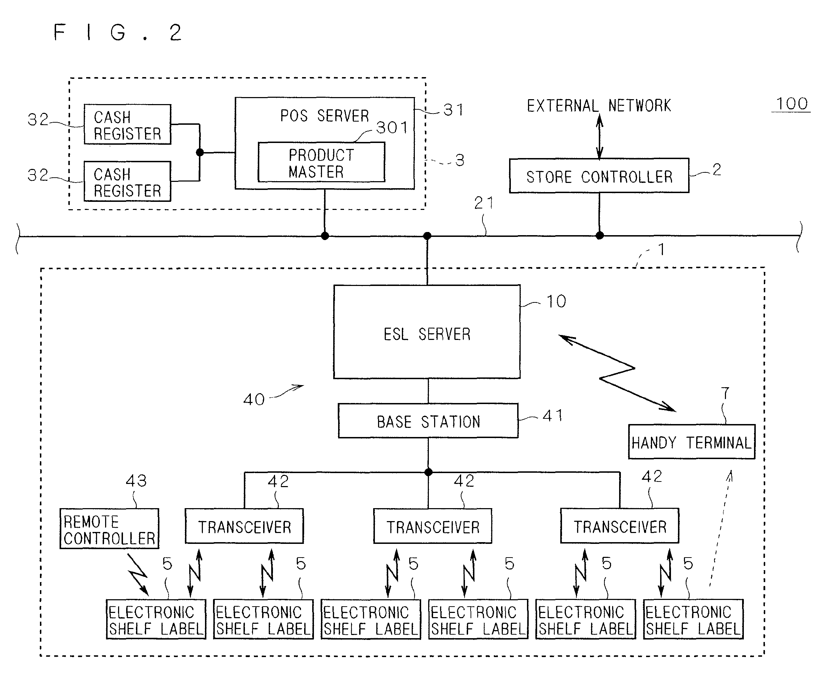

Fig. 2 is a view for showing an example of a structure of a store information system including an electronic shelf label system 1, which is applied to a store. As shown in Fig. 2, a store information system 100 includes a store controller 2 and a POS system 3 in addition to the electronic shelf label system 1. A POS server 31 included in the POS system 3 and an ESL server 10 included in the electronic shelf label system 1 are connected to the store controller 2 via a LAN 21. This allows data transmission among the store controller 2, the POS system 3, and the electronic shelf label system 1.

The store controller 2 is formed of a typical computer, and functions as a device which totally controls the store information system 100. Also, the store controller 2 is connected to an external network such as Internet, and is allowed to communicate with computers and the like installed in a head office that manages a store.

The POS system 3 is a system which collects and analyzes information regarding sale of products at the time of selling the products. The POS system 3 includes a plurality of cash registers 32 for performing checkout procedures, in addition to the POS server 31 which totally controls the POS system 3. The POS server 31 and the cash registers 32 are connected with each other via a dedicated communications cable.

The POS server 31 is formed of a typical computer, and contains a hard disk in which a product master 301 indicating product data such as selling prices of products is stored. In each of the plurality of cash registers 32, checkout procedures of products are performed based on selling prices listed in the product master 301.

Product data regarding all products in a store are under centralized control with the use of the product master 301. Product data listed in the product master 301 includes "product codes", "product names", "selling prices", and the like. Selling prices listed in the product master table 301 can be changed in accordance with instructions given from the computers in the head office (information received by the store controller 2), or through direct operations performed on the POS server 31.

### <2-2. Structure of Electronic Shelf Label System>

The electronic shelf label system 1 is roughly divided into the plurality of electronic shelf labels 5 which have been discussed above and a distribution device 40 for distributing product data which should be displayed on the electronic shelf labels 5. The distribution device 40 includes the ESL server 10, a base station 41, and a plurality of transceivers 42.

The ESL server 10 is a server which totally controls the electronic shelf label system 1, and is installed in a separate room such as a backyard, which is distinct from a selling floor of a store. The base station 41 is connected to the ESL server 10 and each of the transceivers 42, and functions as a relay of a signal between the ESL server 10 and each of the transceivers 42.

The transceivers 42 transmit and receive signals to/from the electronic shelf labels 5 in a store by radio communication such as infrared communication. More specifically, the transceivers 42 have functions of transmitting data signals which are radio signals indicating product data or the like which should be displayed on the electronic shelf labels 5, to the electronic shelf labels 5. The transceivers 42 are fixedly placed on a ceiling of a selling floor at substantially regular intervals so that the transceivers 42 can communicate with all the electronic shelf labels 5 located in the selling floor.

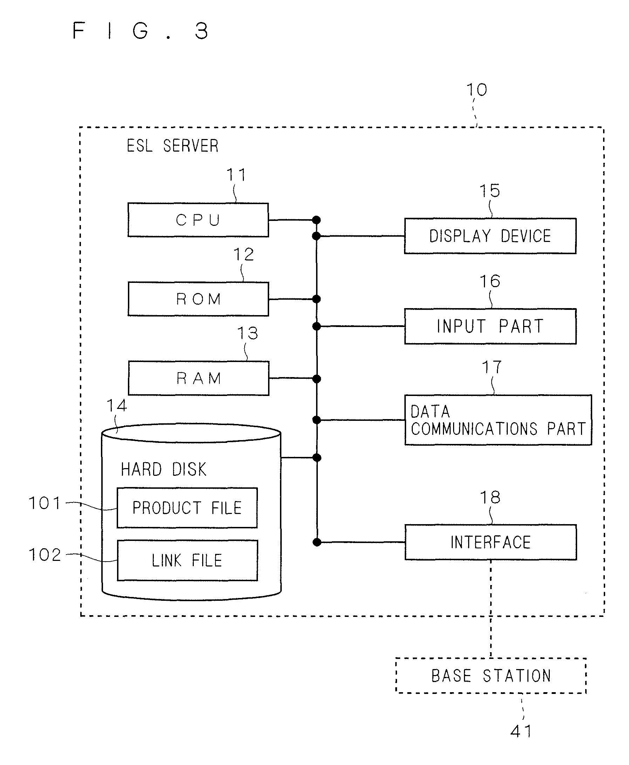

A structure of the ESL server 10 as a hardware is similar to that of a typical computer. Fig. 3 is a view for showing a basic structure of the ESL server 10. As shown in Fig. 3, the ESL server 10 includes a CPU 11 which performs various computations, a ROM 12 which stores a basic program, a RAM 13 serving as a workspace of computations, a hard disk 14 which stores programs, various data files, and the like, a display device 15 which displays a variety of information, an input part 16 which includes a keyboard, a mouse, and the like, and a data communications part 17 which has a data communications function. The data communications part 17 has not only a wired data communications function using the LAN 21, but also a data communications function using a wireless LAN. As a result, the ESL server 10 is allowed to transmit and receive data to/from the store controller 2 and the POS server 31, and to further transmit and receive data to/from an external device having a data communications function using a wireless LAN, by radio communication.

The ESL server 10 further includes an interface 18 for communicating with the base station 41. A control signal for controlling the electronic shelf labels 5 and a data signal including product data which should be displayed on the electronic shelf labels 5 are transmitted to the base station 41 via the interface 18, and are further transmitted from the base station 41 to the electronic shelf labels 5 via the transceivers 42.

A dedicated program is previously stored in the hard disk 14 of the ESL server 10, and the CPU 11 performs computations in accordance with the dedicated program, so that various functions of the ESL server 10 are implemented. Also, the hard disk 14 of the ESL server 10 stores a product file 101 which is a data file used for distribution of product data to the electronic shelf labels 5, and a link file 102.

The product file 101 is a data file indicating a variety of information regarding products, which is mainly used for display on the electronic shelf labels 5. The product file 101 is in tabular form, in which a "product code", a "product name", a "selling price", and the like are stored for each record. Those items of product data are stored based on product data in the product master 301 of the POS system 3 which has been discussed above, through communication between the ESL server 10 and the POS system 3. Accordingly, details of product data in the product file 101 and details of product data in the product master 301 match each other.

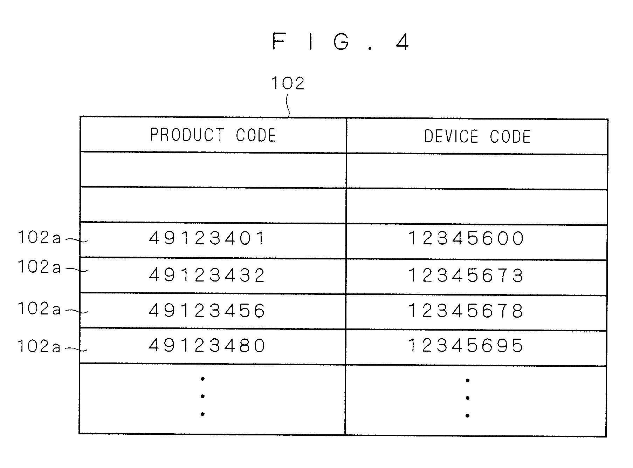

The link file 102 is a data file in which the electronic shelf labels 5 and products correspond to each other in the form of data. Fig. 4 is a view for showing an example of the link file 102. As shown in Fig. 4, the link file 102 stores data in tabular form, and each of records 102a serves as link information in which a product code and a device code correspond to each other, respectively. It is noted that a device code is hardware identification information (hardware ID) which is used for identification of the plurality of electronic shelf labels 5 included in the electronic shelf label system 1 and is unique to each of devices. The provision of the link file 102 allows the electronic shelf labels 5 and products to respectively correspond to each other, in the form of data. With the use of the link file 102, product data regarding a certain product can be transmitted to one of the electronic shelf labels 5 which corresponds to the certain product.

### <2-3. Portable Device>

Referring to Fig. 2, the electronic shelf label system 1 further includes a remote controller 43 and a handy terminal 7 as portable devices that salesclerks of a store carry and use.

The remote controller 43 is a portable transmission device including buttons, which transmits a predetermined radio signal such as an infrared ray to the electronic shelf labels 5 in response to operations of the buttons which are performed by a user (salesclerk of a store). A radio signal transmitted from the remote controller 43 includes a display change signal which instructs the electronic shelf labels 5 to change descriptions displayed thereon. The remote controller 43 is mainly used for changing descriptions displayed on the electronic shelf labels 5 (details will be provided at later paragraphs).

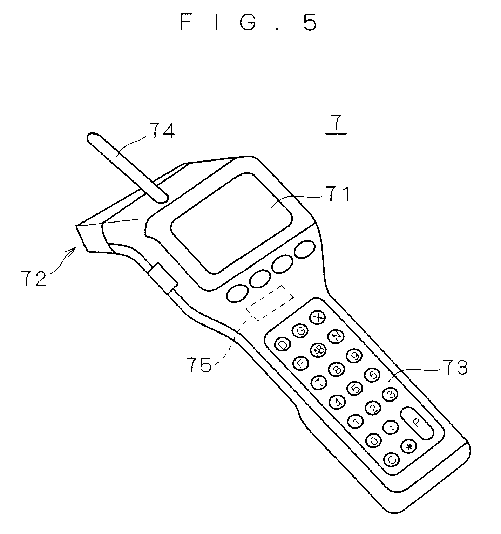

On the other hand, the handy terminal 7 is a portable device used for a process of establishing correspondences between the electronic shelf labels 5 and products in the form of data (which process will be also referred to as a "linking process") and a process of canceling correspondences between the electronic shelf labels 5 and products (which process will be also referred to as a "unlinking process"). Fig. 5 is a view for showing an appearance of the handy terminal 7. As shown in Fig. 5, the handy terminal 7 is a compact communications terminal that a salesclerk of a store can easily carry, and includes a display part 71 for displaying a variety of information, a bar code reader 72 for reading out a bar code, and input buttons 73 at which various inputs of a salesclerk of a store are received.

The handy terminal 7 further includes a communications part 74 which has a data communication function by radio communication using a wireless LAN. That function of the communications part 74 allows the handy terminal 7 to transmit and receive data by radio communication to/from the data communications part 17 of the ESL server 10.

Moreover, the handy terminal 7 includes a control part 75 formed of a chip including a CPU, a memory, and the like, and the control part 75 controls operations of the respective components of the handy terminal 7. A program as a firm ware is previously stored in the memory of the control part 75, and the CPU performs computations in accordance with the program stored in the memory of the control part 75, so that predetermined functions such as functions of establishing and canceling correspondences between the electronic shelf labels 5 and products are implemented.

An operation mode of the handy terminal 7 is any of two operation modes of a "link mode" and an "unlink mode". A "link mode" is an operation mode for performing a linking process, and on the other hand, an "unlink mode" is an operation mode for performing an unlinking process. For use of the handy terminal 7, any of the two operation modes is selected by an operation of the input buttons 73.

### <2-4. Structure of Electronic Shelf Label>

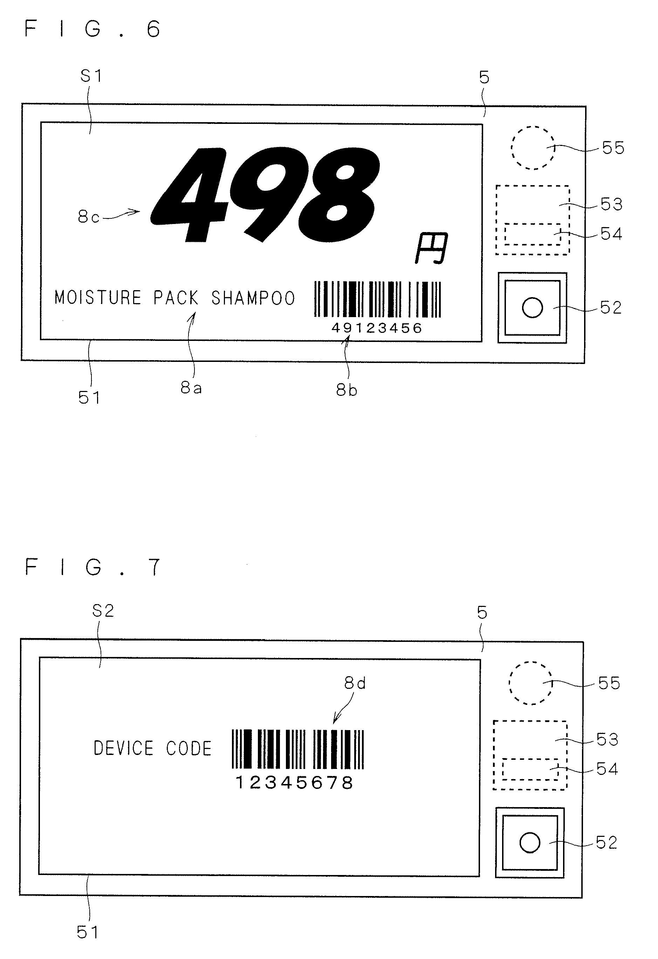

Next, the electronic shelf labels 5 will be discussed in details. Fig. 6 is a view for showing a structure of each of the electronic shelf labels 5. As shown in Fig. 6, a display part 51 for displaying product data of a corresponding product, such as a selling price, and a communications part 52 which is capable of receiving a radio signal such as a data signal fed from the distribution device 40 and a display change signal fed from the remote controller, are provided in a front surface of the electronic shelf label 5.

The display part 51 is formed of a liquid crystal display device of a dot matrix type which includes a plurality of pixels in an orthogonal two-dimensional array. The display part 51 is able to display not only numerical values indicating a selling price of a product, but also a variety of information such as characters, symbols, and graphics.

Also, the electronic shelf label 5 includes a control part 53 formed of an integrated circuit for controlling device operations, and a battery 55 which supplies driving power to its own device. The electronic shelf label 5 is a portable device, and is allowed to operate by driving power supplied from the battery 55.

Further, the control part 53 is provided with a non-volatile memory 54 which stores a variety of information. The memory 54 previously stores a device code of its own device. Also, product data such as a selling price which is transmitted as a data signal from the transceiver 42 is received by the communications part 52, to be stored in the memory 54 for a while, and thereafter, is displayed on the display part 51 under control of the control part 53.

Under normal conditions, while a certain electronic shelf label 5 is in a one-to-one correspondence with a certain product, a product information screen S1 which displays product data of the certain product corresponding to the certain electronic shelf label 5 appears on the display part 51 of the certain electronic shelf label 5, as shown in Fig. 6. The product information screen S 1 includes a product name 8a, a bar-coded product code 8b, and a selling price 8c as product data. The display of the product name 8a and the product code 8b allows the electronic shelf label 5 and the certain product to visually correspond to each other.

Moreover, referring to Fig. 7, in the electronic shelf label 5, a hardware information screen S2 which displays information regarding its own device as a hardware can appear on the display part 51, in place of the product information screen S1. As shown in Fig. 7, on the hardware information screen S2, a bar-coded device code 8d of its own device which is stored in the memory 54 is displayed.

During normal operation (in a state in which the product information screen S1 appears), a change of display from the product information screen S 1 to the hardware information screen S2 is achieved by using the remote controller 43 which has been discussed above. As a result of receipt of a display change signal by the communications part 52, which signal is transmitted in response to press of the buttons of the remote controller 43, the control part 53 accordingly controls such that a screen displayed on the display part 51 is changed from the product information screen S 1 to the hardware information screen S2. Accordingly, a salesclerk of a store can check descriptions of the hardware information screen S2 at any given time with the use of the remote controller 43.

### <3. Operations of Electronic Shelf Label System>

Next, operations of the electronic shelf label system 1 will be discussed.

### <3-1. Basic Operations>

First, basic operations of the electronic shelf label system 1 will be briefly discussed. The basic operations of the electronic shelf label system 1 are to distribute product data from the distribution device 40 to the electronic shelf labels 5 and to cause each of the electronic shelf labels 5 to display product data on the display part 51 thereof. Such distribution of product data is caused at start-up of the system, at the time of updating selling prices of products, and at the other like times. It is noted that updating of selling prices is needed when regular prices listed in the product master table 301 are changed or when selling prices are changed to bargain prices for bargain sale.

At start-up of the system, product data is distributed to the electronic shelf labels 5 which respectively correspond to all products in a store, and on the other hand, at the time of updating selling prices, product data is distributed to only some of the electronic shelf labels 5 which respectively correspond to certain products, selling prices of which should be updated. Since product data is distributed as needed in the foregoing manner, selling prices displayed on the electronic shelf labels 5 always match selling prices which are supposed to be provided at the time of checkout.

For distribution of product data, first, the product file 101 is referred to by the CPU 11 of the ESL server 10, and product data including a "product code", a "product name", a "selling price", and the like of each of products, data of which is to be distributed, is acquired. Further, the link file 102 is referred to, and a "device code" which corresponds to a "product code" of each of products, data of which should be distributed, is acquired. Then, a data signal including the thus acquired product data and device code are transmitted from the transceiver 42. That is, product data which should be displayed is transmitted to one of the electronic shelf labels 5 which has the acquired device code.

The transmitted data signal is received by the communications part 52 of one of the electronic shelf labels 5 which has the device code included in the transmitted data signal. Then, the product data included in the transmitted data signal is stored in the memory 54 and is reflected in descriptions of the product information screen S 1 displayed on the display part 51. In this manner, the distributed product data is displayed on the display part 51 of the electronic shelf label 5.

### <3-2. Unlinking Process>

In the meantime, in a case where locations of products in a store or the like are changed, respective correspondences between products and the electronic shelf labels 5 in the link file 102 should also be changed. For changing respective correspondences between products and the electronic shelf labels 5, an unlinking process for canceling the respective correspondences between products and the electronic shelf labels 5 and a linking process for establishing new correspondences between products and the electronic shelf labels 5 are performed successively in this order. Below, each of an unlinking process and a linking process will be discussed.

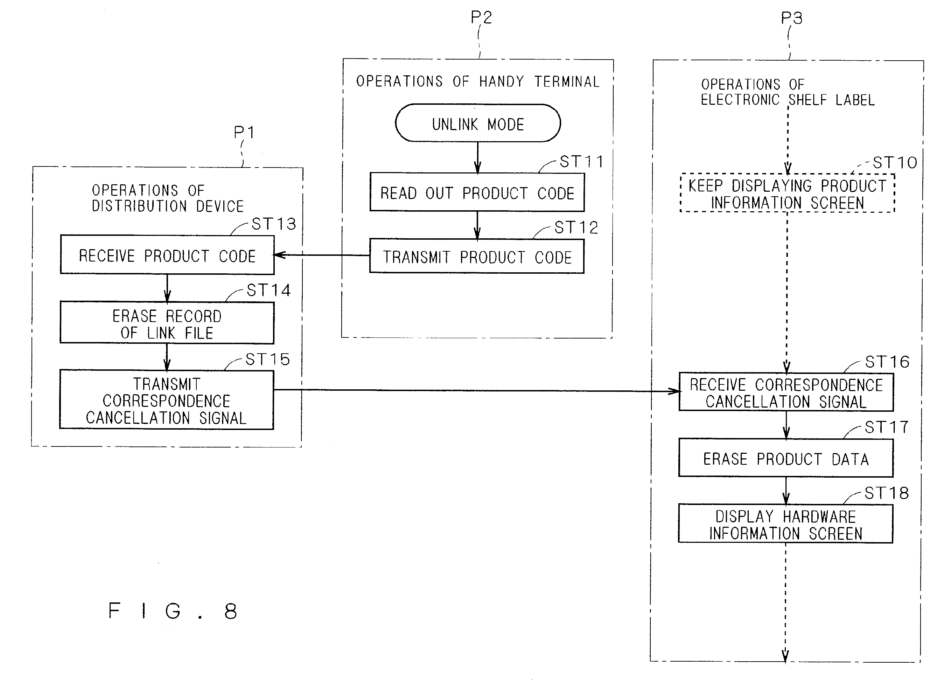

An unlinking process will be discussed, first. Fig. 8 is a flow chart for showing a flow of operations of each of devices of the electronic shelf label system 1 in an unlinking process. In Fig. 8, operations denoted by a reference sign "P1" are operations of the distribution device 40, operations denoted by a reference sign "P2" are operations of the handy terminal 7, and operations denoted by a reference sign "P3" are operations of the electronic shelf labels 5.

First, a salesclerk of a store, i.e., an operator, sets an operation mode of the handy terminal 7 at an "unlink mode". Then, the salesclerk causes the bar code reader 72 to read out a bar code put on a given product for which a correspondence should be cancelled. This results in that the handy terminal 7 acquires a product code of the given product for which a correspondence should be cancelled (step ST11). The acquired product code, together with information indicating an "unlink mode", is transmitted from the communications part 74 to the ESL server 10 via a wireless LAN (step ST12), and then, is received by the data communications part 17 of the ESL server 10 (step ST13).

In response to the receipt of the product code, a given record 102a which corresponds to the received product code in the link file 102 is retrieved by the CPU 11 of the ESL server 10. Then, a "device code" which corresponds to the received product code in the given record 102a is acquired, and at the same time, the given record 102a is erased (step ST14). As a result, a correspondence between the given product and one of the electronic shelf labels 5 in the form of data is cancelled. Next, in response to the foregoing erasing of the record 102a, under control of the CPU 11, a correspondence cancellation signal formed of a radio signal such as a predetermined infrared ray is transmitted from the transceiver 42 to one of the electronic shelf labels 5 which has the "device code" associated with the erased record 102a, to indicate to the one electronic shelf label 5 that the correspondence between the given product and the one electronic shelf label 5 has been cancelled, (step ST15).

The transmitted correspondence cancellation signal is received by the communications part 52 of one of the electronic shelf labels 5 which has the "device code" (in other words, one of the electronic shelf labels 5 for which a correspondence has been cancelled) (step ST16). The one electronic shelf label 5 keeps displaying the product information screen S 1 regarding the corresponding product on the display part 51 immediately before the correspondence cancellation signal is received (step ST10). Then, in response to receipt of the correspondence cancellation signal, under control of the control part 53, product data stored in the memory 54 is erased (step ST17). Further, the hardware information screen S2 including the device code of its own device appears on the display part 51 (step S 18). Thereafter, the display part 51 keeps displaying the hardware information screen S2. Thus, in each of the electronic shelf labels 5 which is placed in a state where the electronic shelf label 5 does not correspond to any product (which will be hereinafter referred to as a "unlinked state"), a bar-coded device code is displayed on the display part 51 as shown in Fig. 7 and such display is maintained.

### <3-3. Linking Process>

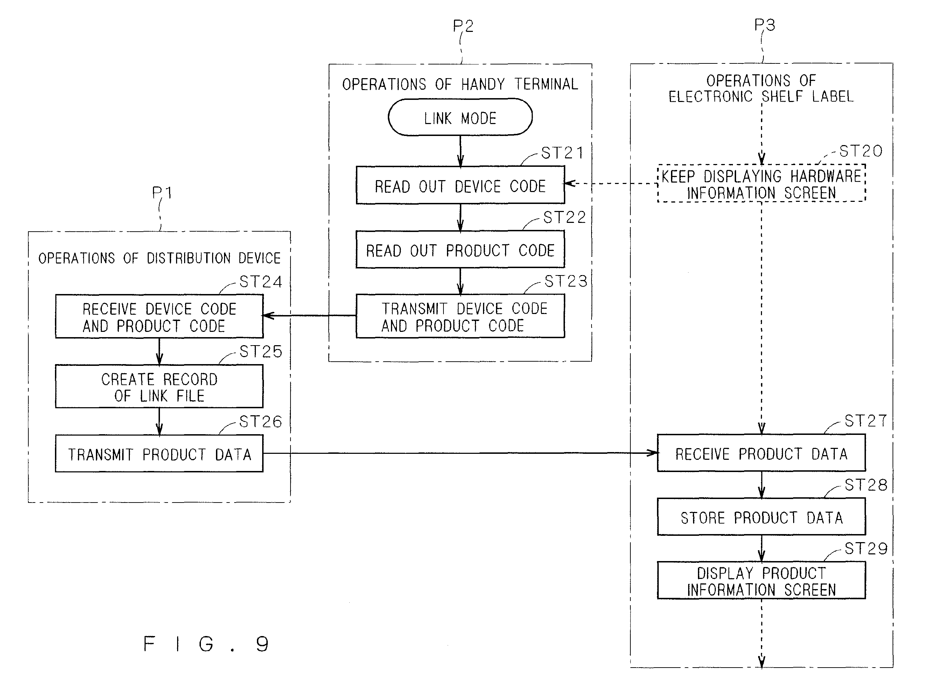

Next, a linking process for establishing a new correspondence between the electronic shelf label 5 which is placed in an unlinked state in the above-discussed manner and a product will be discussed. Fig. 9 is a flow chart for showing a flow of operations of each of devices of the electronic shelf label system 1 in a linking process. As with Fig. 8, in Fig. 9, operations denoted by a reference sign "P1" are operations of the distribution device 40, operations denoted by a reference sign "P2" are operations of the handy terminal 7, and operations denoted by a reference sign "P3" are operations of the electronic shelf labels 5.

First, a salesclerk of a store i.e., an operator, sets an operation mode of the handy terminal 7 at a "link mode". Then, the salesclerk causes the handy terminal 7 to acquire a device code of one of the electronic shelf labels 5 in an unlinked state, for which a new correspondence is to be established. As discussed above, in the electronic shelf label 5 which is placed in an unlinked state, the hardware information screen S2 keeps appearing on the display part 51, and a bar-coded device code is displayed on the display part 51 (step S20). As such, the salesclerk is able to cause the handy terminal 7 to acquire the device code only by causing the bar code reader 72 to read out the device code displayed on the display part 51 (step S21).

Subsequently, the salesclerk causes the bar code reader 72 to read out a bar code put on a product for which a new correspondence is to be established, so that the handy terminal 7 can acquire a product code of the product from the product (step ST22). It is noted that an order of acquiring a device code and a product code may be reversed relative to the order discussed above.

Both of the acquired device code and the acquired product code, together with information indicating a "link mode", are transmitted to the ESL server 10 from the communications part 74 via a wireless LAN (step ST23), and then is received by the data communications part 17 of the ESL server 10 (step ST24).

In response to the receipt of the device code and the product code, under control of the CPU 11 of the ESL server 10, a given record 102a of the link file 102 in which the received device code and the received product code correspond to each other is created. As a result, the one electronic shelf label 5 and the product for which a new correspondence is to be established correspond to each other in the form of data (step ST25).

Next, under control of the CPU 11, the product file 101 is referred to based on the product code of the record 102a which has been newly created, so that product data associated with the product code, such as a "product name", a "selling price", and the like, is acquired. Then, the acquired product data is transmitted to the one electronic shelf label 5 which has the "device code" of the record 102a which has been newly created, from the transceiver 42 (step ST26).

The transmitted product data is received by the communications part 52 of one of the electronic shelf labels 5 which has the "device code" (in other words, one of the electronic shelf labels 5 for which a new correspondence is to be established) (step ST27). In response to the receipt of the product data, under control of the control pat 53, the product data is stored in the memory 54 (step ST28), and the product information screen S1 including the product data appears on the display part 51 (step ST29). Thereafter, the display part 51 keeps displaying the product information screen S 1. Thus, in each of the electronic shelf labels 5 which is placed in a state where the electronic shelf label 5 corresponds to any product (which will be hereinafter referred to as a "linked state"), the display part 51 displays the product information screen S 1 and such display is maintained. Based on the display of the product information screen S 1 as shown in Fig. 6, a salesclerk of a store is able to specify which of products corresponds to the electronic shelf label 5 for which a new correspondence is to be established, in the form of data, to thereby confirm whether or not the electronic shelf label 5 and a product correspond to each other as intended.

### <Summary>

As discussed above, in the electronic shelf label system 1 according to the preferred embodiment of the present invention, in response to receipt of a correspondence cancellation signal in one of the electronic shelf labels 5, the hardware information screen S2 appears. Thus, in the electronic shelf label 5 in an unlinked state, a device code thereof is kept being displayed. Accordingly, in a linking process for establishing a correspondence between the electronic shelf label 5 and a product, a process for causing the electronic shelf label 5 to display the device code thereof with the use of the remote controller or the like is unnecessary, to thereby significantly shorten a time required for establishing a correspondence between the electronic shelf label 5 and a product.

Also, with respect to the handy terminal 7, there is no need to furnish a function of transmitting an infrared signal or the like for causing the electronic shelf label 5 to display a device code thereof. This allows for reduction in size and weight of the handy terminal 7.

Further, while the product information screen S1 is kept being displayed in the electronic shelf label 5 in a linked state basically, it is possible to check descriptions of the hardware information screen S2 at any given time by using the remote controller 43 which transmits a display change signal.

Though the above discussion has been made by taking a case where a correspondence between a product and the electronic shelf label 5 is changed, as an example, in newly introducing the electronic shelf label system 1 into a store, by causing each of the electronic shelf labels 5 in an unlinked state which does not correspond to any product to display the hardware information screen S2 as an initial screen, it is possible to perform a subsequent linking process as fast and easily as in the above-discussed example,.

### <5. Other Preferred Embodiments>

Hereinbefore, the preferred embodiment of the present invention has been discussed. However, the present invention is not limited to the above-discussed preferred embodiment (which will be hereinafter referred to as a "first preferred embodiment"), and various modifications are possible. Below, the other preferred embodiments will be discussed.

### <5-1. Second Preferred Embodiment: Detection of Unlinked State>

According to the above-discussed first preferred embodiment, each of the electronic shelf labels 5 passively displays the hardware information screen S2 in response to receipt of a signal fed from the distribution device 40. Unlike this, each of the electronic shelf labels 5 may be configured to voluntarily detect whether or not the electronic shelf label 5 itself is placed in a linked state or an unlinked state. For the electronic shelf label 5 having such configuration according to a second preferred embodiment, a structure similar to that shown in Fig. 6 can be employed.

In each of the electronic shelf labels 5, product data is stored in the memory 54 in a linked state and product data is not stored in the memory 54 in an unlinked state, as discussed above. Accordingly, it is possible to determine whether the electronic shelf label 5 is in a linked state or an unlinked state by detecting whether or not product data is stored in the memory 54. Such detection of product data in the memory 54 can be achieved by the control part 53 of the electronic shelf label 5.

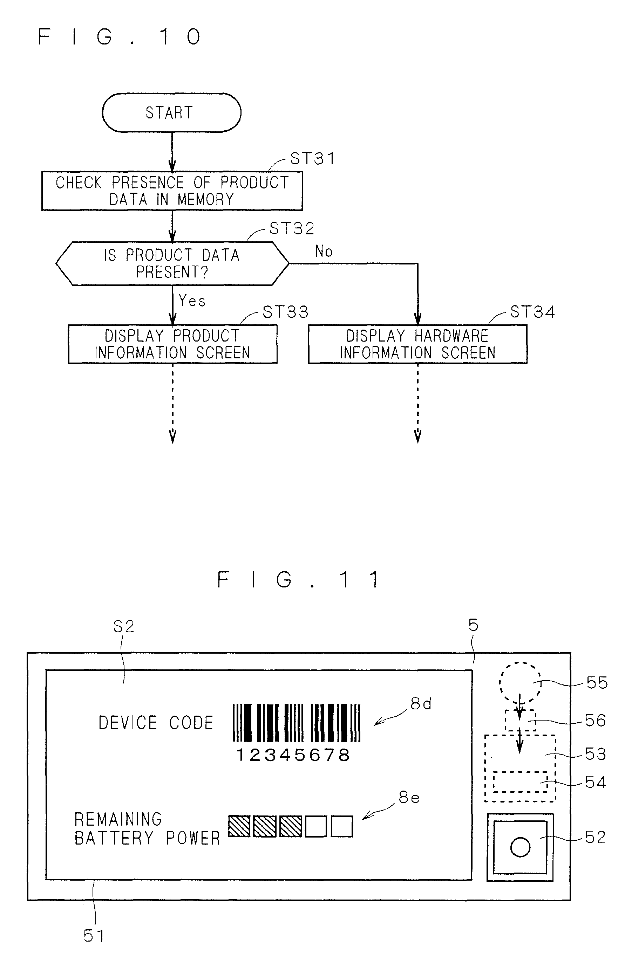

Fig. 10 is a flow chart for showing a flow of operations of the electronic shelf label 5 in determining a state thereof. First, the control part 53 checks contents stored in the memory 54, to detect whether or not product data is stored (step ST31).

Then, if product data is present (if an answer to step ST32 is "Yes"), it is determined that its own device is placed in a linked state, so that the product information screen S1 appears on the display part 51 (step ST33) and the same display is maintained thereafter. On the other hand, if product data is not present (if an answer to step ST32 is "No"), it is determined that its own device is placed in an unlinked state, so that the hardware information screen S2 appears on the display part 51 (step ST34), and the same display is maintained thereafter.

For example, by causing the electronic shelf label 5 to perform the operations shown in Fig. 10 at restart-up after replacement of the battery 55, appropriate information is displayed on the display part 51 of the electronic shelf label 5 depending on whether the electronic shelf label 5 is placed in a linked state or an unlinked state even after the restart-up. Further, since the hardware information screen S2 including a device code appears on the display part 51 in an unlinked state, a subsequent linking process for establishing a correspondence between the electronic shelf label 5 and a product can be easily performed.

Moreover, each of the electronic shelf labels 5 can be caused to perform the operations shown in Fig. 10 at the first start-up in introduction of the electronic shelf labels 5 into a store. In this manner, the hardware information screen S2 including a device code appears on the display part 51 as an initial screen without performing an additional operation for transmitting a predetermined signal to each of the electronic shelf labels 5 or other like operations. Thus, a subsequent linking process for establishing correspondences between the electronic shelf labels 5 and products can be easily performed.

### <5-2. Third Preferred Embodiment: Display of Remaining Power of Battery>

According to the first preferred embodiment, the hardware information screen S2 which is displayed in an unlinked state includes only a device code 8d. Unlike this, information indicating a remaining power (a remaining amount of energy) of the battery 55 may be further included. Fig. 11 is a view for showing a structure of the electronic shelf label 5 according to the third preferred embodiment. The electronic shelf label 5 shown in Fig. 11 is identical to that shown in Fig. 6 except that a voltage sensor 56 for detecting a voltage of the battery 55 is additionally provided. A voltage of the battery 55 which is obtained by the voltage sensor 56 is input to the control part 53.

A voltage of the battery 55 as input is converted into information indicating a remaining power of the battery 55 under control of the control part 53. Then, as shown in Fig. 11, the information 8e indicating the remaining power of the battery 55 is included in the hardware information screen S2, together with the device code 8d. In an example shown in Fig. 11, the remaining power of the battery 55 is indicated in five levels. Thus, in the electronic shelf label 5 according to the third preferred embodiment, information indicating a remaining power of the battery 55 is displayed on the display part 51 in an unlinked state.

The electronic shelf label 5 may possibly be left unattended in an unlinked state without corresponding to any product for a while. In putting the electronic shelf label 5 in the foregoing situation into use again, it is possible to easily determine whether the electronic shelf label 5 is ready for use or the battery must be replaced based on information indicating a remaining power of the battery 55 displayed on the display part 51.

### <5-3. Fourth Preferred Embodiment: Non-Volatile Display Device>

According to the first preferred embodiment, the display part 51 of each of the electronic shelf labels 5 is formed of a liquid crystal display device. Unlike this, the display part 51 may be formed of a non-volatile display device called an "electronic paper" which allows a change in displayed descriptions thereof and maintains displayed descriptions in a state where no driving power is supplied.

For a non-volatile display device, a device disclosed in Patent Document 2 can be employed, for example. Below, a non-volatile display device which can be employed will be briefly discussed.

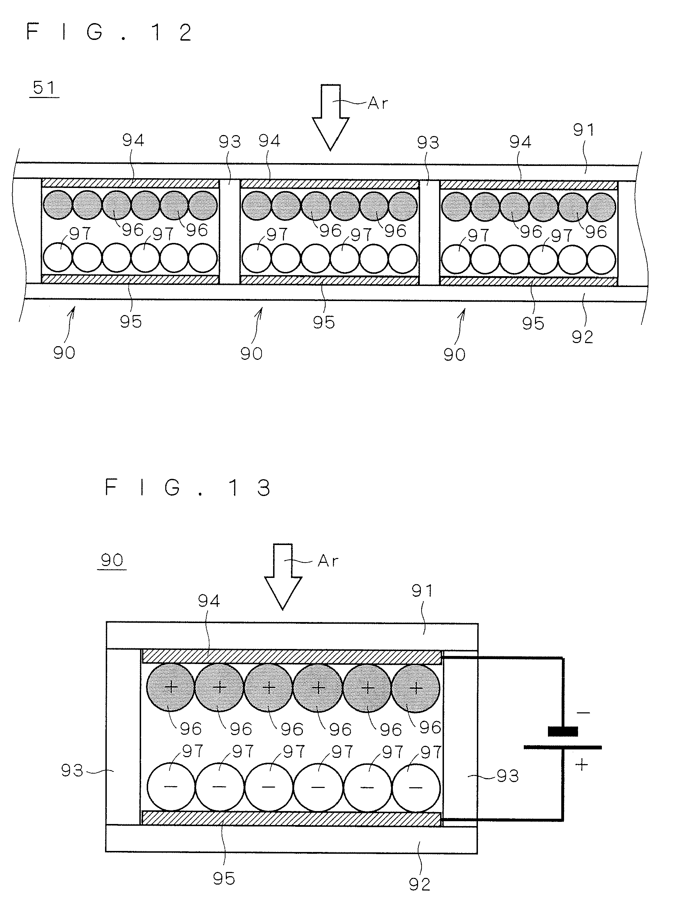

Fig. 12 is a sectional view of the display part 51 formed of a non-volatile display device. As shown in Fig. 12, the display part 51 includes two substrates 91 and 92 each composed of a transparent material such as glass, which are parallel to each other while being spaced from each other by a predetermined distance. Partition walls 93 for partitioning a space between the two substrates 92 and 93 are formed at regular intervals. Each of spaces partitioned by the partitions walls 93 functions as a pixel 90. When viewed from a side of a display surface of the display part 51 (from a side indicated by an arrow Ar in Fig. 12), the pixels 90 are arranged in a matrix.

Each of the pixels 90 is provided with electrodes 94 and 95 which are formed of ITO or the like and are placed on respective inner surfaces of the substrates 91 and 92. Further, each of spaces surrounded by the electrodes 94 and 95 and the partition walls 93 contains two kinds of particles 96 and 97 each composed of a substance which is of a nature intermediate between fluid and particles and has combined features of fluid and particles. One of the two kinds of particles is a black particle 96 and the other is a white particle 97. The black particle 96 is electrically charged to a relatively high potential, and the white particle 97 is electrically charged to a relatively low potential.

In each of the pixels 90 configured as discussed above, upon application of a potential difference between the electrodes 94 and 95 such that the potential of the electrode 95 placed on a side of a back surface opposite to the display surface becomes higher than that of the electrode 94 as shown in Fig. 13, the black particles 96 electrically charged to a high potential move toward the side of the display surface by the Coulomb force and the white particles 97 electrically charged to a low potential move toward the side of the back surface. Accordingly, when viewed from the side of the display surface, the pixel 90 looks black.

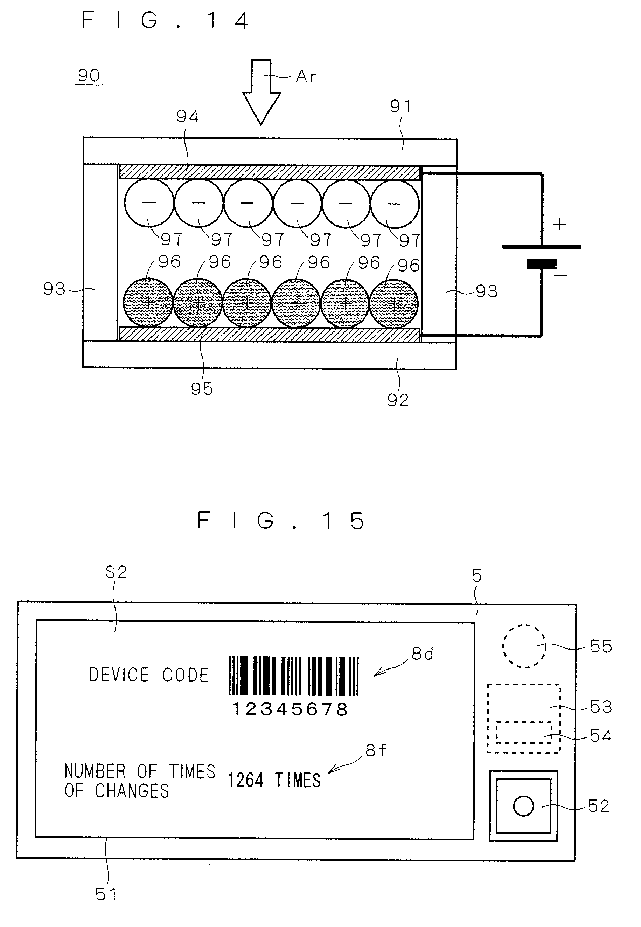

On the other hand, upon application of a potential difference between the electrodes 94 and 95 such that the electrode 94 placed on the side of the display surface becomes higher than that of the electrode 95 as shown in Fig. 14, the black particles 96 electrically charged to a high potential move toward the side of the back surface and the white particles 97 electrically charged to a low potential move toward the side of the display surface. Accordingly, when viewed from the display surface, the pixel 90 looks white.

As discussed above, by controlling a potential difference applied between the electrodes 94 and 95 pixel by pixel, it is possible to switch each of the pixels between a colored state and an uncolored state. As a result, the display part 51 can display various kinds of images, and displayed images can be changed. Further, even while no driving power is supplied because of the properties of the particles 96 and 97, the locations of the particles 96 and 97 are unchanged. As such, displayed descriptions are maintained even in a state where no driving power is supplied to the display part 51.

The display part 51 of the electronic shelf label 5 is configured to always display either the product information screen S 1 or the hardware information screen S2. For this reason, to employ a non-volatile display device as the display part 51, which does not cause power consumption at any time except a time of changing displayed descriptions, could significantly reduce power consumption as compared to a case in which a liquid crystal device or the like is employed. In particular, since an unlinked state of the electronic shelf label 5 is not a period of ordinary use of the electronic shelf label 5, power consumption in such a period is undesirable. In this regard, to employ a non-volatile display device could minimize power consumption also in that period.

Meanwhile, with respect to a non-volatile display device, there may possibly be a limit to the number of times of changes in displayed descriptions, within which a display device can be guaranteed as a proper product. The number of times of changes in displayed descriptions are closely related to a life of the display part 51. As such, as shown in Fig. 15, the hardware information screen S2 may further include information 8f indicating the number of times of changes in displayed descriptions of the display part 51. To this end, the control part 53 is assigned to count the number of times of changes in displayed descriptions of the display part 51. More specifically, a variable indicating the number of times of changes in displayed descriptions, each of which changes is made in response to receipt of a data signal or a display change signal, is stored in the memory 54, and the control part 53 increments the variable each time a change in displayed descriptions in the display part 51 is made.

In this manner, information indicating the number of times of changes in displayed descriptions is displayed on the display part 51 in an unlinked state, so that a life of the display part 51 can be easily determined. It is additionally noted that though the number of times of changes in displayed descriptions is displayed in an example in Fig. 15, the number of remaining times which are left until the limit is reached (the limit minus the number of times of actual changes) may alternatively be displayed.

Further, in the fourth preferred embodiment like the third preferred embodiment, the hardware information screen S2 may further include information indicating a remaining power of the battery 55. However, while power consumption is minimized according to the fourth preferred embodiment, a change in displayed descriptions for displaying a remaining power of a battery causes power consumption. Thus, it is preferable that detection of a remaining power of a battery and a change in displayed description for displaying the detected remaining power of the battery are made with a relatively long period (on a weekly or monthly basis, for example).

### <5-4. Other Modifications>

Alternatively, according to the first preferred embodiment, a correspondence cancellation signal is a signal indicating only that a correspondence between a product and an electronic shelf label is cancelled. Unlike this, image data indicating the hardware information screen S2 which should be displayed on the display part 51 may be included in a correspondence cancellation signal. In this case, the electronic shelf label 5 may be configured to receive a correspondence cancellation signal and display the hardware information screen S2 on the display part 51 by displaying image data included in the received correspondence cancellation signal.

Further alternatively, according to the first preferred embodiment, in an unlinking process, the record 102a of the link file is erased based on a product code read out by the handy terminal 7. Unlike this, the record 102a of the link file may be erased by direct operations performed on the input part 16 of the ESL server 10.

Still further alternatively, according to the third preferred embodiment, a remaining power of the battery 55 is detected by detecting a voltage of the battery 55. Unlike this, a remaining power of the battery 55 may be detected based on a time which has elapsed from the most recent replacement of the battery 55. Also, in a case where a non-volatile display device is employed as the display part 51, a remaining power of the battery 55 may be detected based on the number of times of changes in displayed descriptions which changes have been made since the most recent replacement of the battery 55.

Even still further alternatively, information included in the hardware information screen S2 is not limited to those cited above, and other information regarding a hardware may be included. Such other information regarding a hardware includes a date of manufacture, a manufacture lot number, definition of a display device, a color type of a display device, a version of a firmware, and the like, for example. Such other information can be stored in the memory 54 of each of the electronic shelf labels 5.

## Claims

1. An electronic shelf label system comprising a plurality of electronic shelf labels which are located in such a manner as to respectively correspond to products and display product data of said products respectively corresponding thereto, and a server for distributing said product data to said plurality of electronic shelf labels, wherein
said server includes:
a storage means for storing link information in which product identification information for identifying said products and hardware identification information for identifying said plurality of electronic shelf labels respectively correspond to each other; and
a transmission means for transmitting a correspondence cancellation signal to said electronic shelf labels which correspond to said products in said link information, in response to erasing of said link information, and
each of said plurality of electronic shelf labels includes:
a receipt means for receiving said correspondence cancellation signal; and
a display means for displaying a hardware information screen including said hardware identification information of each of said electronic shelf labels in response to receipt of said correspondence cancellation signal.

2. The electronic shelf label system according to claim 1, further comprising:
a portable device which includes a means for reading out said hardware identification information displayed on said display means of each of said electronic shelf labels, and a means for acquiring said product identification information of a certain product from said certain product; and
a creation means for newly creating said link information in which said hardware identification information and said product identification information which are acquired by said portable device correspond to each other.

3. The electronic shelf label system according to claim 1, wherein
each of said plurality of electronic shelf labels further includes a detection means for detecting a remaining power of a battery which supplies driving power for each of said plurality of electronic shelf labels, and
said hardware information screen further includes information indicating said remaining power of said battery.

4. The electronic shelf label system according to claim 1, wherein
said display means includes a display device which allows a change in displayed descriptions thereon and maintains said displayed descriptions while no driving power is supplied.

5. The electronic shelf label system according to claim 4, wherein
each of said plurality of electronic shelf labels further includes a count means for counting the number of times of changes in said displayed descriptions on said display device, and
said hardware information screen further includes information including said number of times of changes.

6. The electronic shelf label system according to any of claims 1 through 5, further comprising
a transmission device which is capable of transmitting a display change signal to said electronic shelf labels in response to an operation performed by a user, wherein
said receipt means is capable of receiving said display change signal transmitted from said transmission device, and
said display means displays said hardware information screen in response to receipt of said display change signal.

7. An electronic shelf label used for an electronic shelf label system, which is capable of displaying product data of a corresponding product, comprising:
a means for receiving a correspondence cancellation signal which is transmitted from a server for storing link information in which product identification information for identifying said product and hardware identification information for identifying said electronic shelf label correspond to each other, in response to erasing of said link information; and
a display means for displaying said hardware identification information of said electronic shelf label in response to receipt of said correspondence cancellation signal.

8. An electronic shelf label used for an electronic shelf label system, which is capable of displaying product data of a corresponding product, comprising:
a storage means which is capable of storing said product data;
a detection means for detecting whether or not said product data is stored in said storage means; and
a display means for displaying hardware identification information unique to said electronic shelf label when said product data is not stored in said storage means.

9. A method of changing a correspondence between an electronic shelf label which is used for an electronic shelf label system and is capable of displaying product data of a corresponding product and said product, comprising the steps of:
(a) erasing link information in which product identification information for identifying said product and hardware identification information for identifying said electronic shelf label correspond to each other;
(b) causing said electronic shelf label which corresponds to said product in said link information to display said hardware identification information thereof, in response to erasing of said link information;
(c) reading out said hardware identification information displayed on said electronic shelf label;
(d) acquiring said product identification information of said product from said product; and
(e) creating new link information in which said hardware identification information read out in said step (c) and said product identification information acquired in said step (d) correspond to each other.
